(19) Europäisches Patentamt / European Patent Office / Office européen des brevets

(11) EP 4 679 553 A1

(12) **EUROPEAN PATENT APPLICATION**
published in accordance with Art. 153(4) EPC

(43) Date of publication:
**14.01.2026 Bulletin 2026/03**

(21) Application number: **24767471.6**

(22) Date of filing: **15.02.2024**

(51) International Patent Classification (IPC):
***H01M 10/0567*** *(2010.01)* ***H01M 10/0569*** *(2010.01)*
***H01M 10/052*** *(2010.01)* ***H01M 4/131*** *(2010.01)*
***H01M 4/525*** *(2010.01)* ***H01M 4/505*** *(2010.01)*
***H01M 4/02*** *(2006.01)*

(52) Cooperative Patent Classification (CPC):
**H01M 4/02; H01M 4/131; H01M 4/505; H01M 4/525; H01M 10/052; H01M 10/0567; H01M 10/0569;** Y02E 60/10

(86) International application number:
**PCT/KR2024/095156**

(87) International publication number:
**WO 2024/186185 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2023 KR 20230029302**

(71) Applicant: **SK On Co., Ltd.**
**Seoul 03161 (KR)**

(72) Inventors:
- **LEE, Minyoung**
  **Daejeon 34124 (KR)**
- **PARK, Minwoo**
  **Daejeon 34124 (KR)**

(74) Representative: **Stolmár & Partner Patentanwälte PartG mbB**
**Blumenstraße 17**
**80331 München (DE)**

# (54) LITHIUM SECONDARY BATTERY ELECTROLYTE AND LITHIUM SECONDARY BATTERY COMPRISING SAME

(57) The present disclosure relates to a lithium secondary battery electrolyte comprising a phosphorofluoridate compound represented by chemical formula 1 and a lithium secondary battery comprising same. The lithium secondary battery comprising the electrolyte according to one embodiment produces an output that does not degrade even under high voltage, and has excellent lifespan characteristics, a high capacity recovery rate at high temperature, and excellent storage stability. In addition, the lithium secondary battery comprising the electrolyte according to one embodiment has excellent output characteristics resulting from reduced internal resistance of the battery, and exhibits excellent cycle characteristics and stability even when charged under high temperature and high voltage.

[FIG. 1]

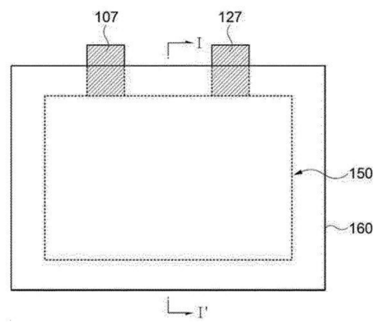

## Description

[Technical Field]

The following disclosure relates to an electrolytic solution for a lithium secondary battery and a lithium secondary battery including the same.

[Background Art]

Recently, as portable electronic devices have been widely supplied and have become smaller, thinner and lighter, a study of a secondary battery used as a power source thereof, which has a small size, is lightweight, and may be charged and discharged for a long time, has also been actively conducted.

A lithium secondary battery produces electric energy by oxidation and reduction reactions when lithium ions are inserted into and desorbed from the positive and negative electrodes, and is manufactured by charging an organic electrolytic solution or a polymer electrolytic solution between the positive and negative electrodes, using a material capable of insertion and desorption of lithium ions as the positive and negative electrodes.

An organic electrolytic solution which is currently widely used may include ethylene carbonate, propylene carbonate, dimethoxyethane, γ-butyrolactone, N,N-dimethylformamide, tetrahydrofuran, acetonitrile, or the like. However, since the organic electrolytic solution is generally prone to evaporation and is highly inflammable, it causes safety problems at a high temperature such as ignition due to internal short circuit at the time of internal heat generation by overcharge and overdischarge, in application to a lithium ion secondary battery.

In addition, in the lithium secondary battery, lithium ions from a lithium metal oxide which is a positive electrode at initial charge move to a carbon electrode which is a negative electrode and are intercalated in carbon, in which lithium has strong reactivity so that a surface of a carbon particle, which is a negative electrode active material, reacts with an electrolyte, while a coating film which is referred to as a solid electrolyte interface (SEI) film is formed on a surface of the negative electrode.

Performance of the lithium secondary battery greatly depends on a configuration of the organic electrolytic solution and the SEI film formed by the reaction of the organic electrolytic solution and the electrode. That is, the formed SEI film suppresses a side reaction of a carbon material with an electrolyte solvent, for example, decomposition of the electrolytic solution on the surface of the carbon particle which is the negative electrode, prevents collapse of a negative electrode material due to insertion (co-intercalation) of the electrolyte solvent into the negative electrode material, and also fulfills the conventional role as a lithium ion tunnel, thereby minimizing battery performance degradation.

However, as charge and discharge of the lithium secondary battery proceed, a positive electrode active material structurally collapses, so that metal ions are eluted from the surface of a positive electrode, and the eluted metal ions are electrodeposited on a negative electrode to deteriorate the negative electrode. The deterioration phenomenon tends to be further accelerated when a potential of the positive electrode is increased or the battery is exposed to a high temperature. Accordingly, various studies for developing a new organic electrolytic solution including various additives for stabilizing the SEI film have been attempted.

## [Disclosure]

[Technical Problem]

An object of the present disclosure is to provide an electrolytic solution for a lithium secondary battery which may excellently implement battery characteristics such as high-temperature stability, charge and discharge characteristics, and output characteristics.

Another object of the present disclosure is to provide a lithium secondary battery having excellent battery characteristics such as high-temperature stability, charge and discharge characteristics, and output characteristics.

[Technical Solution]

In one general aspect, an electrolytic solution for a lithium secondary battery includes: a lithium salt;

a nonaqueous organic solvent; and
a compound represented by the following Chemical Formula 1:

[Chemical Formula 1]

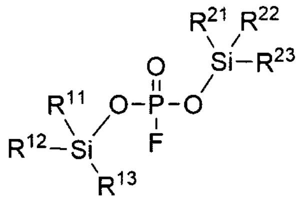

wherein

$R^{11}$, $R^{12}$, and $R^{13}$ are independently of one another hydrogen, a $C_{1-10}$ alkyl group, a $C_{2-10}$ alkenyl group, a $C_{3-10}$ cycloalkyl group, or a $C_{6-20}$ aryl group,

$R^{21}$, $R^{22}$, and $R^{23}$ are independently of one another hydrogen, a $C_{1-10}$ alkyl group, a $C_{2-10}$ alkenyl group, a $C_{3-10}$ cycloalkyl group, or a $C_{6-20}$ aryl group, and

the alkyl group, the alkenyl group, the cycloalkyl group, and the aryl group of $R^{11}$, $R^{12}$, $R^{13}$, $R^{21}$, $R^{22}$, and $R^{23}$ may be substituted by a halogen group.

In another general aspect, a lithium secondary battery includes: the electrolytic solution for a lithium secondary battery according to an exemplary embodiment, a negative electrode, and a positive electrode.

[Advantageous Effects]

The present disclosure relates to an electrolytic solution for a lithium secondary battery including a phosphorofluoridate compound represented by Chemical Formula 1, and a lithium secondary battery including the electrolytic solution, wherein the lithium secondary battery including the electrolytic solution according to an exemplary embodiment has excellent life characteristics without output degradation even under high voltage and has a high capacity recovery rate and excellent storage stability at a high temperature. In addition, the lithium secondary battery comprising the electrolyte according to one embodiment has excellent output characteristics resulting from reduced internal resistance of the battery and exhibits excellent cycle characteristics and stability even when charged under high temperature and high voltage.

[Description of Drawings]

FIG. 1 is a schematic plan view of a lithium secondary battery according to an exemplary embodiment.

FIG. 2 is a cross-sectional view taken along the line I-I' of FIG. 1.

[Best Mode]

Since the embodiments described in the present specification may be modified in many different forms, the technology according to an exemplary embodiment is not limited to the embodiments set forth herein. Furthermore, throughout the specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, or 5% of a stated value.

The terms "alkyl" and "alkenyl" used in the present specification include both straight chain and branched chain forms.

The term "discharge" used in the present specification refers to a process in which a lithium ion is desorbed from a negative electrode, and the term "charge" refers to a process in which a lithium ion is inserted into a negative electrode.

Hereinafter, the electrolytic solution for a lithium secondary battery according to an exemplary embodiment will

be described.

An exemplary embodiment provides an electrolytic solution for a lithium secondary battery including: a lithium salt; a nonaqueous organic solvent; and a compound represented by the following Chemical Formula 1:

[Chemical Formula 1]

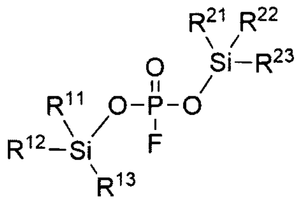

wherein

$R^{11}$, $R^{12}$, and $R^{13}$ are independently of one another hydrogen, a $C_{1-10}$ alkyl group, a $C_{2-10}$ alkenyl group, a $C_{3-10}$ cycloalkyl group, or a $C_{6-20}$ aryl group,
$R^{21}$, $R^{22}$, and $R^{23}$ are independently of one another hydrogen, a $C_{1-10}$ alkyl group, a $C_{2-10}$ alkenyl group, a $C_{3-10}$ cycloalkyl group, or a $C_{6-20}$ aryl group, and
the alkyl group, the alkenyl group, the cycloalkyl group, and the aryl group of $R^{11}$, $R^{12}$, $R^{13}$, $R^{21}$, $R^{22}$, and $R^{23}$ may be substituted by a halogen group. For example, one or more may be substituted by any one or more halogen atoms of I, Br, Cl, and F.

The electrolytic solution according to an exemplary embodiment implements battery characteristics such as excellent storage at a high temperature and output characteristics, by including the phosphorofluoridate compound in which a phosphorus (P) atom is substituted by one fluorine atom (mono-fluoridated).

Specifically, a positive electrode active material of the lithium secondary battery structurally collapses as charging and discharging proceed, a metal ion is eluted from the surface of a positive electrode, and the eluted metal ion is electrodeposited on a negative electrode to deteriorate the negative electrode. When the potential of the positive electrode is increased or the battery is exposed to a high temperature, the deterioration phenomenon tends to accelerate further. In addition, when driving voltage is increased, coating film decomposition on the surface of a positive electrode occurs, and the surface of the positive electrode may be exposed to an electrolyte to cause a problem of a side reaction with the electrolyte.

As a means for solving the problem, an exemplary embodiment provides the phosphorofluoridate compound represented by Chemical Formula 1, and the phosphorofluoridate compound included in the electrolytic solution according to an exemplary embodiment is coordinated with the transition metal of a positive electrode to further stabilize a positive electrode structure, thereby preventing a battery swelling phenomenon due to gassing during storage at a high temperature, and thus, a thickness increase rate at a high temperature may be significantly lowered and deterioration of life characteristics at room temperature may be prevented even during operation at a high voltage.

In an exemplary embodiment, $R^{11}$, $R^{12}$, and $R^{13}$ may be independently of one another hydrogen, a $C_{1-5}$ alkyl group, a $C_{2-5}$ alkenyl group, a $C_{3-6}$ cycloalkyl group, or a $C_{6-10}$ aryl group, and $R^{21}$, $R^{22}$, and $R^{23}$ may be independently of one another hydrogen, a $C_{1-5}$ alkyl group, a $C_{2-5}$ alkenyl group, a $C_{3-6}$ cycloalkyl group, or $C_{6-10}$ aryl group. The alkyl group, the alkenyl group, the cycloalkyl group, and the aryl group may be substituted by a halogen group without limitation.

In an exemplary embodiment, $R^{11}$, $R^{12}$, and $R^{13}$ may be independently of one another hydrogen, a $C_{1-3}$ alkyl group, a $C_{2-3}$ alkenyl group, a $C_{5-6}$ cycloalkyl group, or a $C_{6-8}$ aryl group, and $R^{21}$, $R^{22}$, and $R^{23}$ may be independently of one another hydrogen, a $C_{1-3}$ alkyl group, a $C_{2-3}$ alkenyl group, a $C_{5-6}$ cycloalkyl group, or $C_{6-8}$ aryl group. The alkyl group, the alkenyl group, the cycloalkyl group, and the aryl group may be substituted by a halogen group without limitation.

In an exemplary embodiment, $R^{11}$, $R^{12}$, and $R^{13}$ may be independently of one another a $C_{1-3}$ alkyl group, and $R^{21}$, $R^{22}$, and $R^{23}$ may be independently of one another $C_{1-3}$ alkyl group.

In an exemplary embodiment, $R^{11}$, $R^{12}$, and $R^{13}$ may be all identically a $C_{1-3}$ alkyl group, and $R^{21}$, $R^{22}$, and $R^{23}$ may be all identically a $C_{1-3}$ alkyl group.

In an exemplary embodiment, at least one of $R^{11}$, $R^{12}$, and $R^{13}$ may be an alkyl group, and the rest may be hydrogen, and at least one of $R^{21}$, $R^{22}$, and $R^{23}$ may be an alkyl group, and the rest may be hydrogen.

Specifically, the compound represented by Chemical Formula 1 may be a compound represented by the following Chemical Formula 1-1 or a compound represented by the following Chemical Formula 1-2:

[Chemical Formula 1-1]

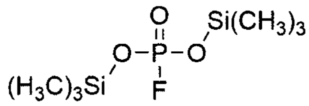

;

[Chemical Formula 1-2]

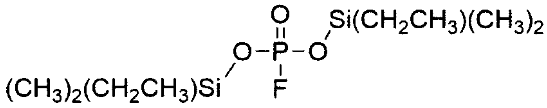

.

However, since it is only an example of the compound represented by Chemical Formula 1, the present disclosure is not necessarily limited thereto.

In an exemplary embodiment, the compound represented by Chemical Formula 1 may be included at 0.01 wt% to 5.0 wt% with respect to the total weight of the electrolytic solution. Otherwise, it may be included at, for example, 0.01 wt% to 3.0 wt%, 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, 0.1 wt% to 1.0 wt%, 0.2 wt% to 0.8 wt%, 0.3 wt% to 0.7 wt%, or about 0.5 wt%. However, since the range is an example, the present disclosure is not necessarily limited to the range.

The nonaqueous organic solvent included in the electrolytic solution according to an exemplary embodiment may include a solvent selected from cyclic carbonate solvents, linear carbonate solvents, and mixed solvents thereof. The cyclic carbonate solvent may be selected from the group consisting of ethylene carbonate, propylene carbonate, butylene carbonate, vinylene carbonate, vinylethylene carbonate, fluoroethylene carbonate, and mixtures thereof, and the linear carbonate may be selected from the group consisting of dimethyl carbonate, diethyl carbonate, dipropyl carbonate, ethyl methyl carbonate, methyl propyl carbonate, methyl isopropyl carbonate, ethyl propyl carbonate, and mixtures thereof.

The cyclic carbonate solvent has a high polarity and may sufficiently dissociate lithium ions, but has low viscosity to have low ion conductivity. Therefore, the cyclic carbonate solvent may be used in combination with a linear carbonate solvent having low polarity but low viscosity. In an exemplary embodiment, when the nonaqueous organic solvent includes both the cyclic carbonate solvent and the linear carbonate solvent (that is, includes a mixed solvent thereof), a volume ratio between the cyclic carbonate solvent and the linear carbonate solvent may be 1:1 to 1:9, for example, 1:1 to 1:8, 1:1 to 1:6, 1:1 to 1:5, 1:2 to 1:4, or about 1:3.

In an exemplary embodiment, the electrolytic solution may further include an additive, in addition to the compound represented by Chemical Formula 1. The additive may include, for example, any one or more selected from the group consisting of fluorine-substituted carbonate-based compounds, sulfinyl group-containing compounds, oxalatoborate-based compounds, oxalatophosphate-based compound, and vinylidene carbonate-based compounds.

In an exemplary embodiment, the sulfinyl group-containing compound may be any one or more selected from the group consisting of sulfone-based compounds, sulfite-based compounds, sulfonate-based compounds, sultone-based compounds, and sulfate-based compounds. In an exemplary embodiment, the fluorine-substituted carbonate-based compound may be fluoroethylene carbonate (FEC), and the sulfinyl group-containing compound may be propene sultone (prop-1-ene-1,3-sultone, PRS), 1,3-propane sultone (PS), or ethylene sulfate (ESA). Therefore, the electrolytic solution according to an exemplary embodiment may further include an additive including any one or more selected from the group consisting of fluoroethylene carbonate (FEC), propene sultone (PRS), 1,3-propane sultone (PS), and ethylene sulfate (ESA) .

The electrolytic solution according to an exemplary embodiment includes ethylene carbonate (FEC) as the additive together with the compound represented by Chemical Formula 1, and furthermore, may include any one or more of propene sultone (PRS), 1,3-propane sultone (PS), and ethylene sulfate (ESA).

Otherwise, the electrolytic solution according to an exemplary embodiment may include a combination of fluoroethylene carbonate (FEC), propene sultone (PRS), 1,3-propane sultone (PS), and ethylene sulfate (ESA) as the additive together with the compound represented by Chemical Formula 1.

Otherwise, the electrolytic solution according to an exemplary embodiment may further include lithium difluorobis (oxalato) phosphate ($LiPF_2(C_2O_4)_2$, LiDFBOP) or lithium bis(oxalato)borate ($LiB(C_2O_4)_2$, LiBOB) as the additive.

When the electrolytic solution according to an exemplary embodiment includes the additive, the additive may be included at 0.1 wt% to 10.0 wt%, or 0.1 wt% to 8.0 wt%, 0.1 wt% to 6.0 wt%, 0.1 wt% to 5.0 wt%, 1.0 wt% to 5.0 wt%, 1.0 wt% to 4.0 wt%, 2.0 wt% to 4.0 wt%, 2.0 wt% to 3.0 wt%, or about 2.5 wt%.

In an exemplary embodiment, the lithium salt included in the electrolytic solution is not particularly limited, but, for example, may be one or two or more selected from the group consisting of $LiPF_6$, $LiBF_4$, $LiClO_4$, $LiSbF_6$, $LiAsF_6$,

$LiN(SO_2C_2F_5)_2$, $LiN(CF_3SO_2)_2$, $LiN(SO_3C_2F_5)_2$, $LiN(SO_2F)_2$, $LiCF_3SO_3$, $LiC_4F_9SO_3$, $LiC_6H_5SO_3$, LiSCN, $LiAlO_2$, $LiAlCl_4$, $LiN(C_xF_{2x+1}SO_2)(C_yF_{2y+1}SO_2)$ (wherein x and y are independently of each other a natural number), LiCl, LiI, and $LiB(C_2O_4)_2$.

The concentration of the lithium salt may be 0.1 M to 2.0 M, 0.7 M to 1.5M, or about 1.0 M. When the concentration of the lithium salt is less than 0.1 M, the conductivity of the electrolytic solution is lowered to decrease electrolytic solution performance, and when the concentration is more than 2.0 M, the viscosity of the electrolytic solution is increased to decrease the lithium ion. The lithium salt serves as a source of lithium ions in the battery and allows basic operation of a lithium secondary battery.

Since the electrolytic solution for a lithium secondary battery according to an exemplary embodiment is stable usually at -20°C to 60°C or 40°C to 60°C and maintains electrochemically stable characteristics even at a high voltage in an area of 4.20 V or more, specifically at 4.30 V or more, or 4.35 V or more, based on a positive electrode potential, it may be applied to all lithium secondary batteries such as a lithium ion battery and a lithium polymer battery.

Another exemplary embodiment provides a lithium secondary battery including the electrolytic solution for a lithium secondary battery according to an exemplary embodiment, a positive electrode, and a negative electrode.

The lithium secondary battery according to an exemplary embodiment implements battery characteristics such as excellent storage at a high temperature and output characteristics, by including an electrolytic solution including the phosphorofluoridate compound in which a phosphorus (P) atom is substituted by one fluorine atom (mono-fluoridated).

The phosphorofluoridate compound included in the electrolytic solution for a lithium secondary battery according to an exemplary embodiment is coordinated with the transition metal of a positive electrode to further stabilize a positive electrode structure, thereby suppressing a side reaction between the surface of the positive electrode and the electrolytic solution during storage at a high temperature to prevent decomposition of the electrolytic solution, and thus, preventing gassing to effectively suppress a swelling phenomenon in which a battery swells, and thus, the storage stability at a high temperature of the lithium secondary battery may be improved. In addition, cycle life characteristics and stability may be improved even under high temperature and high voltage.

Specifically, the lithium secondary battery manufactured from the electrolytic solution for a lithium secondary battery according to an exemplary embodiment has a very low increase rate of battery thickness of 110% or less when left at a high temperature for a long time and has excellent storage stability at a high temperature.

A non-limiting example of the secondary battery according to an exemplary embodiment includes a lithium metal secondary battery, a lithium ion secondary battery, a lithium polymer secondary battery, a lithium ion polymer secondary battery, or the like.

FIGS. 1 and 2 are schematic plan view and cross-sectional view showing lithium secondary batteries according to exemplary embodiments, respectively. FIG. 2 is a cross-sectional view taken along the line I-I' of FIG. 1.

Referring to FIGS. 1 and 2, the lithium secondary batteries according to exemplary embodiments may include a positive electrode 100 and a negative electrode 130.

The positive electrode 100 may include a positive electrode current collector 105 and a positive electrode active material layer 110 formed on the positive electrode current collector 105. For example, the positive electrode active material layer 110 may be formed on one or both surfaces of the positive electrode current collector 105.

For example, the positive electrode active material layer 110 may include a positive electrode active material, and, if necessary, a positive electrode binder and a conductive material.

For example, the positive electrode 100 may be manufactured by mixing and stirring a positive electrode active material, a positive electrode binder, a conductive material, a dispersion medium, and the like to prepare a positive electrode slurry, and then applying the positive electrode slurry on the positive electrode current collector 105 and performing drying and rolling.

For example, the positive electrode current collector 105 may include stainless steel, nickel, aluminum, titanium, copper, or an alloy thereof, and preferably, may include aluminum or an aluminum alloy.

The positive electrode active material may be a material capable of reversible insertion and desorption of lithium ions. For example, the positive electrode active material may be a lithium metal oxide including a metal element such as nickel, cobalt, manganese, and aluminum.

In an exemplary embodiment, the positive electrode active material may include lithium metal oxide particles including nickel.

In an exemplary embodiment, the lithium metal oxide particles may include 80 mol% or more of nickel, based on the total moles of all elements except lithium and oxygen. In this case, a lithium secondary battery having a high capacity may be implemented.

In an exemplary embodiment, the lithium metal oxide particles may include 83 mol% or more, 85 mol% or more, 90 mol% or more, or 95 mol% or more of nickel, based on the total moles of all elements except lithium and oxygen.

In an exemplary embodiment, the lithium metal oxide particles may further include at least one of cobalt and manganese. In this case, a lithium secondary battery having further improved output characteristics, penetration stability, and the like may be implemented.

In an exemplary embodiment, the lithium metal oxide particles may be represented by a chemical formula of $Li_aNi_xM_{1-x}O_{2+y}$. Herein, in the chemical formula, M may be at least one of Co, Mn, Al, Zr, Ti, Cr, B, Mg, Ba, Si, Y, W, Sr, Na, Ca, Hf, V, Nb, Ta, Mo, Fe, Cu, Ag, Zn, Ga, C, Sn, and Zr. In the chemical formula, $0.9 \leq a \leq 1.2$, $0.5 \leq x \leq 0.99$, and $0.1 \leq y \leq 0.1$ may be satisfied.

In an exemplary embodiment, the lithium metal oxide particles may further include a doping element. For example, the doping element may include at least one of Al, Ti, Ba, Zr, Si, B, Mg, P, Sr, W, and La. In this case, a lithium secondary battery having further improved life characteristics may be implemented.

In an exemplary embodiment, the lithium metal oxide particles may further include a coating element. For example, the coating element may include at least one of Al, Ti, Ba, Zr, Si, B, Mg, P, Sr, W, and La. In this case, a lithium secondary battery having further improved life characteristics may be implemented.

In an exemplary embodiment, the positive electrode may include a composite metal oxide of lithium with any one or more transition metals selected from cobalt, manganese, and nickel as the positive electrode active material, and for example, the positive electrode may include a positive electrode active material including a lithium-nickel-cobalt-manganese-based composite oxide.

In an exemplary embodiment, the electrolytic solution for a secondary battery including the phosphorofluoridate compound and the positive electrode active material including a nickel-cobalt-manganese-based active material are applied to a secondary battery together, a swelling phenomenon which is a problem of the nickel-cobalt-manganese-based active material having a high content of nickel and a problem of reduced stability at a high temperature may be solved.

The positive electrode active material according to an exemplary embodiment may be $Li_x(Ni_aCo_bMn_c)O_2$ ($0.5<x<1.3$, $0<a<1$, $0<b<1$, $0<c<1$, $a+b+c=1$), $Li_x(Ni_aCo_bMn_c)O_4$ ($0.5<x<1.3$, $0<a<2$, $0<b<2$, $0<c<2$, $a+b+c=2$), or a mixture thereof, or $Li_x(Ni_aCo_bMn_c)O_2$ in which $0.90 \leq x \leq 1.10$, $0.3 \leq a \leq 0.9$, $0.05 \leq b<0.5$, $0.05 \leq c<0.5$, and $a+b+c=1$). Otherwise, the positive electrode active material may be, for example, $LiNi_{0.6}Co_{0.2}Mn_{0.2}O_2$, $LiNi_{0.5}Co_{0.2}Mn_{0.3}O_2$, $LiNi_{0.8}Co_{0.1}Mn_{0.1}O_2$, $LiNi_{1/3}Co_{1/3}Mn_{1/3}O_2$, or a mixture thereof.

In an exemplary embodiment, the positive electrode binder may include an organic binder such as polyvinylidene fluoride (PVDF), a vinylidene fluoride-hexafluoropropylene copolymer (PVDF-co-HFP), polyacrylonitrile, and polymethylmethacrylate; and a water-based binder such as styrene-butadiene rubber (SBR). In addition, for example, the positive electrode binder may be used with a thickener such as carboxymethyl cellulose (CMC).

In an exemplary embodiment, the conductive material may include a carbon-based conductive material such as graphite, carbon black, graphene, and carbon nanotubes; and a metal-based conductive material such as tin, tin oxide, titanium oxide, and a perovskite material such as $LaSrCoO_3$ and $LaSrMnO_3$.

A negative electrode 130 may include a negative electrode current collector 125 and a negative electrode active material layer formed on the negative electrode current collector 125. For example, the negative electrode active material layer 120 may be formed on one or both surfaces of the negative electrode current collector 125.

For example, the negative electrode active material layer 120 may include a negative electrode active material, and if necessary, a negative electrode binder and a conductive material.

For example, the negative electrode 130 may be manufactured by mixing and stirring a negative electrode active material, a negative electrode binder, a conductive material, a solvent, and the like to prepare a negative electrode slurry, and then applying the negative electrode slurry on the negative electrode current collector 125, and performing drying and rolling.

For example, the negative electrode current collector 125 may include gold, stainless steel, nickel, aluminum, titanium, copper, or an alloy thereof, and preferably, may include copper or a copper alloy.

For example, the negative electrode active material may be a material capable of adsorbing and desorbing lithium ions. For example, the negative electrode active material may include a lithium alloy, a carbon-based material, a silicon-based material, and the like.

For example, the lithium alloy may include a metal element such as aluminum, zinc, bismuth, cadmium, antimony, silicon, lead, tin, gallium, and indium.

For example, the carbon-based active material may include crystalline carbon, amorphous carbon, a carbon composite, carbon fiber, and the like.

For example, the amorphous carbon may include hard carbon, coke, mesocarbon microbead (MCMB) fired at 1500°C or lower, mesophase pitch-based carbon fiber (MPCF), and the like.

For example, the crystalline carbon may include natural graphite, artificial graphite, graphitized coke, graphitized MCMB, graphitized MPCF, and the like.

For example, the negative electrode active material may include a silicon-based active material. For example, the silicon-based active material may include Si, $SiO_x(0<x<2)$, a silicon-carbon composite material (Si/C), SiO/C, Si-metal, and the like. In this case, a lithium secondary battery having a high capacity may be implemented.

For example, when the negative electrode active material includes a silicon-based active material, a problem of an increased battery thickness during repeated charging and discharging may arise. The lithium secondary battery

according to exemplary embodiments may reduce an increase rate of battery thickness by including the electrolytic solution.

In an exemplary embodiment, a content of the silicon atom in the negative electrode active material may be 1 wt% to 20 wt%, 1 wt% to 15 wt%, or 1 wt% to 10 wt%.

The negative electrode binder and the conductive material may be substantially the same material as or similar materials to the positive electrode and the conductive material described above. For example, the negative electrode binder may be a water-based binder such as styrene-butadiene rubber (SBR). In addition, for example, the negative electrode binder may be used with a thickener such as carboxymethyl cellulose (CMC).

The electrolytic solution according to an exemplary embodiment may form an electrode electrolyte interphase having excellent stability on the surface of an electrode. Accordingly, a side reaction between the electrode active material (for example, a lithium metal oxide, a carbon-based material, and a silicon-based material) and an electrolytic solution may be effectively suppressed.

In an exemplary embodiment, the area of the negative electrode 130 may be larger than the area of the positive electrode 100. In this case, lithium ions produced from the positive electrode 100 may move to the negative electrode 130 well without being precipitated in the middle.

For example, the positive electrode 100 and the negative electrode 130 may be placed alternately and repeatedly to form an electrode assembly 150.

In an exemplary embodiment, a separator 140 may be interposed between the positive electrode 100 and the negative electrode 130. For example, the electrode assembly 150 may be formed by winding, stacking, zigzag-folding (z-folding), and the like of the separator 140.

For example, the separator 140 may include a porous polymer film manufactured from a polyolefin-based polymer such as an ethylene homopolymer, a propylene homopolymer, an ethylene-butene copolymer, an ethylene/hexene copolymer, and an ethylene/methacrylate copolymer. In addition, for example, the separator 140 may include non-woven fabric formed of glass fiber having a high melting point, polyethylene terephthalate fiber, and the like.

The lithium secondary batteries according to exemplary embodiments may include a positive electrode lead 107 which is connected to the positive electrode 100 and protrudes out of a case 160; and a negative electrode lead 127 which is connected to the negative electrode 130 and protrudes out of the case 160.

For example, the positive electrode 100 and the positive electrode lead 107 may be electrically connected. Likewise, the negative electrode 130 and the negative electrode lead 127 may be electrically connected.

For example, the positive electrode lead 107 may be electrically connected to the positive electrode current collector 105. In addition, the negative electrode lead 130 may be electrically connected to the negative electrode current collector 125.

For example, the positive electrode current collector 105 may include a projection part (positive electrode tab, not shown) in one side. On the positive electrode tab, the positive electrode active material layer 110 may not be formed. The positive electrode tab may be integrated with the positive electrode current collector 105 or connected by welding and the like. The positive electrode current collector 105 and the positive electrode lead 107 may be electrically connected by the positive electrode tab.

Likewise, the negative electrode current collector 125 may include a protrusion part (negative electrode tab, not shown) in one side. On the negative electrode tab, the negative electrode active material layer 120 may not be formed. The negative electrode tab may be integrated with the negative electrode current collector 125 or connected by welding and the like. The negative electrode current collector 125 and the negative electrode lead 127 may be electrically connected by the negative electrode tab.

For example, the electrode assembly 150 may include a plurality of positive electrodes and a plurality of negative electrodes. For example, the plurality of positive electrodes and negative electrodes may be placed alternately, and a separator may be interposed between the positive electrode and the negative electrode. Accordingly, the lithium secondary battery according to an exemplary embodiment may include a plurality of positive electrode tabs and a plurality of negative electrode tabs which protrude from each of the plurality of positive electrodes and the plurality of negative electrodes.

For example, the positive electrode tabs (or negative electrode tabs) may be stacked, compressed, and welded to form a positive electrode tab laminate (or negative electrode tab laminate). The positive electrode tab laminate may be electrically connected to the positive electrode lead 107. In addition, the negative electrode tab laminate may be electrically connected to the negative electrode lead 127.

The electrode assembly 150 and the electrolytic solution according to exemplary embodiments of the present invention described above described above may be accommodated in a case 160 to form a lithium secondary battery.

The lithium secondary battery may be manufactured for example, in a cylindrical, rectangular, pouch, or coin shape, and the like.

[Best Mode for Carrying Out the Invention]

Hereinafter, the examples and the experimental examples will be illustrated specifically in detail in the following. However, since the examples and the experimental examples described later only illustrate a part of one exemplary embodiment, the technology described in the present specification should not be construed as being limited thereto.

**<Preparation Example 1> Preparation of phosphorofluoridate compound (Chemical Formula 1-1)**

[Chemical Formula 1-1]

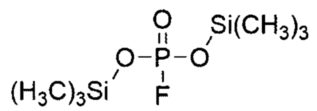

Sodium monofluorophosphate (14.5 g, 100 mmol) and tetrahydrofuran (50 mL) solvents were added to a round bottom flask in order, and stirring was performed while cooling to 0°C. Trimethylsilyl chloride (27.9 mL, 220 mmol) was slowly added dropwise to the mixture for 1 hour while maintaining 0°C, and then stirring was performed at room temperature for 4 hours. After completing the reaction, the mixture was depressurized to remove remaining tetrahydrofuran and trimethylsilyl chloride, and a mixture remaining after depressurization was filtered to remove sodium chloride as a by-product. Finally, the solvent in the remaining organic layer was depressurized to remove the solvent, and drying was performed to obtain 20.5 g of a target compound as a colorless liquid sample.

$^1$H-NMR($CDCl_3$, 500MHz): 0.33 (s, 18H)

**<Preparation Example 2> Preparation of phosphorofluoridate compound (Chemical Formula 1-2)**

[Chemical Formula 1-2]

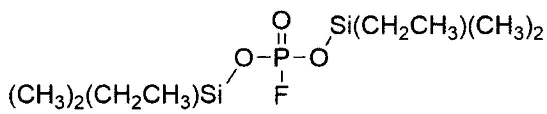

The target compound was prepared in the same manner as in Preparation Example 1, except that ethyl dimethylsilyl chloride was added instead of trimethylsilyl chloride.

**<Examples 1 to 8> Manufacture of lithium secondary battery**

Ethylene carbonate (EC): $LiPF_6$ was dissolved in a mixed solvent of ethylene carbonate (EC): ethyl methyl carbonate (EMC) at a volume ratio of 25:75 to be a 1.0 M solution, thereby manufacturing a nonaqueous electrolytic solution to be used in a lithium secondary battery, which was used as a basic electrolytic solution (1.0 M $LiPF_6$, EC/EMC = 25/75). Next, components described in the following Table 1 were further added for the manufacture.

A battery to which the non-aqueous electrolyte was applied was manufactured as follows:

$Li[Ni_{0.8}Co_{0.1}Mn_{0.1}]O_2$, carbon black, and polyvinylidene fluoride (PVDF) as a positive electrode active material were dispersed in NMP at a weight ratio of 98:1:1 to prepare a positive electrode slurry. The positive electrode slurry was uniformly applied on an area excluding a protrusion part of an aluminum foil having the protrusion part (positive electrode tab) on one side, and dried and rolled to manufacture a positive electrode.

A negative electrode active material of Si/C and graphite at a weight ratio of 15:85, styrene-butadiene rubber (SBR), and carboxymethyl cellulose (CMC) were dispersed in water at a weight ratio of 97:1:2 to manufacture a negative electrode slurry. The negative electrode slurry was uniformly applied on an area excluding a protrusion part of a copper foil having the protrusion part (negative electrode tab) on one side, and dried and rolled to manufacture a negative electrode.

A polyethylene separator (thickness: 13 μm) was interposed between the positive electrode and the negative electrode to form an electrode assembly. The positive electrode lead and the negative electrode lead were connected to the positive electrode tab and the negative electrode tab by welding, respectively. The electrode assembly was

accommodated in a pouch so that some areas of the positive electrode lead and the negative electrode lead were exposed to the outside, and 3 sides except an electrolytic solution injection part surface were sealed.

The electrolytic solution manufactured above was injected into the pouch, and the electrolytic solution injection part side was sealed to manufacture a lithium secondary battery.

**<Comparative Examples 1 and 2> Manufacture of lithium secondary battery**

Lithium secondary batteries were manufactured in the same manner as in the above examples, except that components to be added to the electrolytic solution were as shown in the following Table 1.

[Table 1]

| | Compound additive | | Additive (content) (wt%) | | | |
|---|---|---|---|---|---|---|
| | Type | Content (wt%) | FEC | PRS | PS | ESA |
| Example 1 | Chemical Formula 1-1 | 0.01 | 1 | 0.5 | 0.5 | 0.5 |
| Example 2 | Chemical Formula 1-1 | 0.1 | 1 | 0.5 | 0.5 | 0.5 |
| Example 3 | Chemical Formula 1-1 | 0.5 | 1 | 0.5 | 0.5 | 0.5 |
| Example 4 | Chemical Formula 1-1 | 1.0 | 1 | 0.5 | 0.5 | 0.5 |
| Example 5 | Chemical Formula 1-1 | 3.0 | 1 | 0.5 | 0.5 | 0.5 |
| Example 6 | Chemical Formula 1-2 | 0.1 | 1 | 0.5 | 0.5 | 0.5 |
| Example 7 | Chemical Formula 1-2 | 0.5 | 1 | 0.5 | 0.5 | 0.5 |
| Example 8 | Chemical Formula 1-2 | 3.0 | 1 | 0.5 | 0.5 | 0.5 |
| Comparative Example 1 | - | - | 1 | 0.5 | 0.5 | 0.5 |
| Comparative Example 2 | Chemical Formula 2 | 1.0 | 1 | 0.5 | 0.5 | 0.5 |

(The wt% is based on the total weight of the electrolytic solution, and all electrolytic solutions include the following basic electrolytic solution.)

* Basic electrolytic solution: 1.0 M $LiPF_6$, EC/EMC = 25/75
* FEC: fluoroethylene carbonate
* PRS: propene sultone (prop-1-ene-1,3-sultone)
* PS: 1,3-propane sultone
* ESA: ethylene sulfate
*

Chemical Formula 1-1: 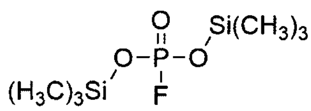

*

Chemical Formula 1-2: 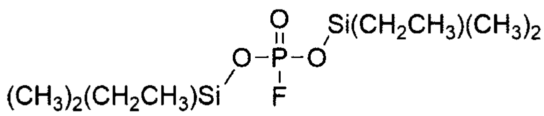

*

Chemical Formula 2: 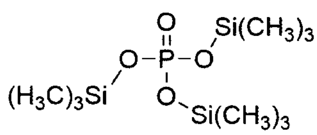

**<Experimental Example> Evaluation of lithium secondary battery**

In order to evaluate the performance of the lithium secondary batteries manufactured in Examples 1 to 8, the following experiment was carried out, and the results are shown in the following Table 2.

<Evaluation method>

1. Evaluation of initial performance
1) Discharge capacity

A lithium secondary battery was charged (CC-CV 0.5 C 4.2 V 0.05 C CUT-OFF) and discharged (CC 0.5 C 3.0 V CUT-OFF) repeatedly 3 times at room temperature (25°C).

2) Thickness

The thickness of the lithium secondary battery after being discharged by the above method was measured.

3) D_DCIR (discharge DCIR)

A lithium secondary battery was charged to SOC (state of discharge) of 60%. At 60% of SOC, the battery was discharged for 10 seconds, respectively, while changing a C-rate to 0.2 C, 0.5 C, 1.0 C, 1.5 C, 2.0 C, and 2.5 C. The voltage when the discharge proceeded was plotted and the slope was adopted as D_DCIR.

2. Evaluation of storage stability at 60°C (5 weeks)

A lithium secondary battery was left in a chamber at 60°C, and the following evaluation was performed.

1) Thickness increase rate

An initial thickness before a lithium secondary battery was left in a chamber at 60°C was measured using a flat plate thickness measuring device (Mitutoyo, 543-490B). A thickness of the lithium secondary battery after being left in a chamber at 60°C for 5 weeks was measured using the same device. The thickness measured after being left was divided by the initial thickness to calculate the thickness increase rate as a percentage.

Thickness increase rate (%) = (battery thickness after stored at high temperature/initial battery thickness)*100

2) Resistance increase rate (Ret.)

A lithium secondary battery was left in a chamber at 60°C for 5 weeks, and D_DCIR was measured in the same manner as in "3) D_DCIR of 1. Evaluation of initial performance".
The measured D_DCIR was divided by the initial D_DCIR measured in "3) D_DCIR of 1. Evaluation of initial performance" and the resistance increase rate was calculated as a percentage.

Resistance increase rate (%) = (D_DCIR after being stored at high temperature/initial D_DCIR)*100

3) Capacity recovery rate (Rec.)

A lithium secondary battery was left in a chamber at 60°C for 5 weeks and then discharged (CC 1. C 3.0 V CUT-OFF) once. Next, the lithium secondary battery was charged (CC-CV 1.0 C 4.2 V 0.05 C CUT-OFF) and discharged (CC 1.0 C 3.0 V CUT-OFF) once, respectively to measure a discharge capacity.
The measured discharge capacity was divided by the initial discharge capacity measured in "1) Discharge capacity of 1. Evaluation of initial performance" and the capacity recovery rate was calculated as a percentage.

Capacity recovery rate (%) = (discharge capacity after being stored at high temperature/initial discharge capacity)*100

3. Evaluation of output characteristics at -10°C

1) Discharge capacity

A lithium secondary battery was charged (CC-CV 1.0 C 4.2 V 0.05 C CUT-OFF) and discharged (CC 1.0 C 3.0 V CUT-OFF) once, respectively at -10°C, and a charge capacity and a discharge capacity at a low temperature were measured.

2) C_DCIR (charge DCIR) and D_DCIR (discharge DCIR)

A lithium secondary battery was charged to SOC (state of discharge) of 60% at -10°C. At 60% of SOC, the battery was discharged and auxiliarily charged for 10 seconds, respectively, while changing a C-rate to 0.2 C, 0.5 C, 1.0 C, 1.5 C, 2.0 C, and 2.5 C. The voltage when the discharge and auxiliary charge proceeded was plotted and the slope was adopted as D_DCIR and C_DCIR.

[Table 2]

| | Initial performance | | | Evaluation of storage stability at 60°C (5 weeks) | | | | Output characteristics at -10°C | | |
|---|---|---|---|---|---|---|---|---|---|---|
| | Discharge capacity (mAh) | Coulomb efficiency (%) | D_DCIR (mΩ) | Thickness increase rate (%) | D_DCIR (mΩ) | Ret. (%) | Rec. (%) | Discharge capacity (mAh) | C_DCIR (mΩ) | D_DCIR (mΩ) |
| Example 1 | 1706 | 80.4 | 47.9 | 127 | 51.8 | 86 | 83 | 1113.6 | 185.8 | 174.5 |
| Example 2 | 1720 | 81.3 | 42.7 | 118 | 46.3 | 90 | 91 | 1223.1 | 165.3 | 161.1 |
| Example 3 | 1760 | 82.9 | 39.9 | 105 | 40.3 | 94 | 95 | 1364.6 | 148.8 | 143.5 |
| Example 4 | 1740 | 82.4 | 32.0 | 105 | 40.3 | 92 | 94 | 1410.6 | 120.0 | 125.3 |
| Example 5 | 1728 | 81.9 | 39.9 | 105 | 42.1 | 90 | 93 | 1264.1 | 161.8 | 160.5 |
| Example 6 | 1718 | 81.2 | 42.9 | 119 | 46.8 | 90 | 91 | 1218.9 | 166.8 | 165.7 |
| Example 7 | 1723 | 81.3 | 42.5 | 110 | 43.3 | 92 | 93 | 1293.1 | 155.3 | 151.9 |
| Example 8 | 1720 | 81.2 | 42.7 | 111 | 43.2 | 92 | 93 | 1301.2 | 154.1 | 149.8 |
| Comparative Example 1 | 1708 | 80.4 | 48.6 | 128 | 52.5 | 86 | 83 | 1109.1 | 187.1 | 175.0 |
| Comparative Example 2 | 1715 | 81.5 | 45.3 | 127 | 53.1 | 86 | 83 | 1187.3 | 181.5 | 169.0 |

As confirmed from Table 2, it was found that the lithium secondary batteries of the examples manufactured from the electrolytic solution including the phosphorofluoridate compound had a higher initial capacity and had decreased D_DCIR due to an optimized binding force between the compound and the transition metal of the positive electrode, as compared with the lithium secondary batteries of the comparative examples. In addition, the lithium secondary batteries of the examples all had a thickness increase rate of 110% or less after being allowed to stand at 60°C for 5 weeks, which was effectively reduced as compared with the lithium secondary batteries according to the comparative examples, and thus, were found to have excellent long-term high-temperature stability. In addition, the lithium secondary batteries of the examples showed a higher capacity and a lower resistance (C_DCIR) even at a low temperature of -10°C than the lithium secondary batteries of the comparative examples.

Hereinabove, though an implementation has been described in detail by the examples and the experimental examples, the scope of an implementation is not limited to specific examples, and should be construed by the appended claims.

## Claims

1. An electrolytic solution for a lithium secondary battery comprising:

a lithium salt;
a nonaqueous organic solvent; and
a compound represented by the following Chemical Formula 1:

[Chemical Formula 1]

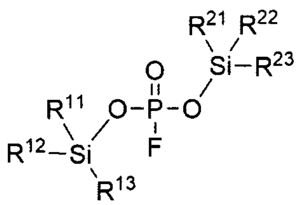

wherein
$R^{11}$, $R^{12}$, and $R^{13}$ are independently of one another hydrogen, a $C_{1-10}$ alkyl group, a $C_{2-10}$ alkenyl group, a $C_{3-10}$ cycloalkyl group, or a $C_{6-20}$ aryl group,
$R^{21}$, $R^{22}$, and $R^{23}$ are independently of one another hydrogen, a $C_{1-10}$ alkyl group, a $C_{2-10}$ alkenyl group, a $C_{3-10}$ cycloalkyl group, or a $C_{6-20}$ aryl group, and
the alkyl group, the alkenyl group, the cycloalkyl group, and the aryl group of $R^{11}$, $R^{12}$, $R^{13}$, $R^{21}$, $R^{22}$, and $R^{23}$ may be substituted by a halogen group.

2. The electrolytic solution for a lithium secondary battery of claim 1,

wherein $R^{11}$, $R^{12}$, and $R^{13}$ are independently of one another hydrogen, a $C_{1-5}$ alkyl group, a $C_{2-5}$ alkenyl group, a $C_{3-6}$ cycloalkyl group, or a $C_{6-10}$ aryl group,
$R^{21}$, $R^{22}$, and $R^{23}$ are independently of one another hydrogen, a $C_{1-5}$ alkyl group, a $C_{2-5}$ alkenyl group, a $C_{3-6}$ cycloalkyl group, or a $C_{6-10}$ aryl group, and
the alkyl group, the alkenyl group, the cycloalkyl group, and the aryl group of $R^{11}$, $R^{12}$, $R^{13}$, $R^{21}$, $R^{22}$, and $R^{23}$ may be substituted by a halogen group.

3. The electrolytic solution for a lithium secondary battery of claim 1,

wherein $R^{11}$, $R^{12}$, and $R^{13}$ are independently of one another a $C_{1-3}$ alkyl group, and
$R^{21}$, $R^{22}$, and $R^{23}$ are independently of one another a $C_{1-3}$ alkyl group.

4. The electrolytic solution for a lithium secondary battery of claim 1,

wherein $R^{11}$, $R^{12}$, and $R^{13}$ are all identically a $C_{1-3}$ alkyl group, and
$R^{21}$, $R^{22}$, and $R^{23}$ are all identically a $C_{1-3}$ alkyl group.

**5.** The electrolytic solution for a lithium secondary battery of claim 1, wherein the compound represented by Chemical Formula 1 is a compound represented by the following Chemical Formula 1-1 or a compound represented by the following Chemical Formula 1-2:

[Chemical Formula 1-1]

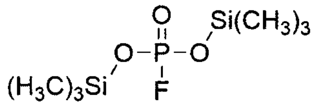

[Chemical Formula 1-2]

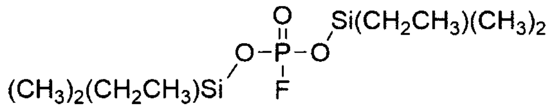

.

**6.** The electrolytic solution for a lithium secondary battery of claim 1, wherein the compound represented by Chemical Formula 1 is included at 0.01 wt% to 5.0 wt% with respect to the total weight of the electrolytic solution.

**7.** The electrolytic solution for a lithium secondary battery of claim 1, wherein the nonaqueous organic solvent includes a solvent selected from cyclic carbonate solvents, linear carbonate solvents, and mixed solvents thereof.

**8.** The electrolytic solution for a lithium secondary battery of claim 7, wherein the cyclic carbonate solvent and the linear carbonate solvent are included at a volume ratio of 1:1 to 1:9.

**9.** The electrolytic solution for a lithium secondary battery of claim 1, wherein the electrolytic solution further includes any one or more additives selected from the group consisting of fluorine-substituted carbonate-based compounds, sulfinyl group-containing compounds, oxalatoborate-based compounds, oxalatophosphate-based compound, and vinylidene carbonate-based compounds.

**10.** The electrolytic solution for a lithium secondary battery of claim 9, wherein the sulfinyl group-containing compound is any one or more selected from the group consisting of sulfone-based compounds, sulfite-based compounds, sulfonate-based compounds, sultone-based compounds, and sulfate-based compounds.

**11.** The electrolytic solution for a lithium secondary battery of claim 9, wherein the additive includes any one or more selected from the group consisting of fluoroethylene carbonate (FEC), propene sultone (prop-1-ene-1,3-sultone, PRS), 1,3-propane sultone (PS), and ethylene sulfate (ESA).

**12.** The electrolytic solution for a lithium secondary battery of claim 9, wherein the additive is included at 0.1 wt% to 10.0 wt% with respect to the total weight of the electrolytic solution.

**13.** A lithium secondary battery comprising a positive electrode, a negative electrode, and the electrolytic solution for a lithium secondary battery of any one of claims 1 to 12.

**14.** The lithium secondary battery of claim 13, wherein the positive electrode includes a composite metal oxide of lithium with any one or more transition metals selected from cobalt, manganese, and nickel as a positive electrode active material.

**15.** The lithium secondary battery of claim 13, wherein the positive electrode includes a positive electrode active material including a lithium-nickel-cobalt-manganese-based composite oxide.

[FIG. 1]

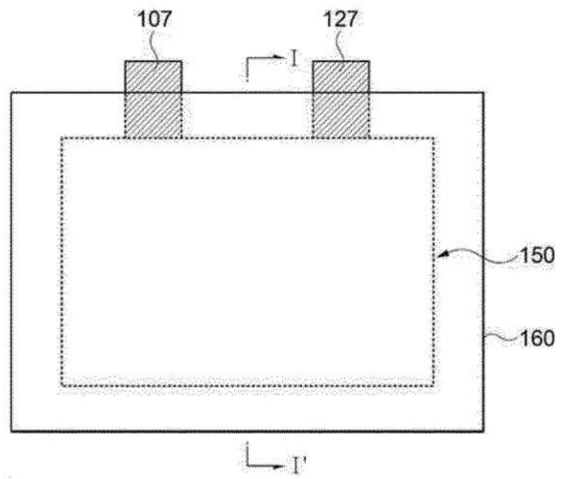


[FIG. 2]

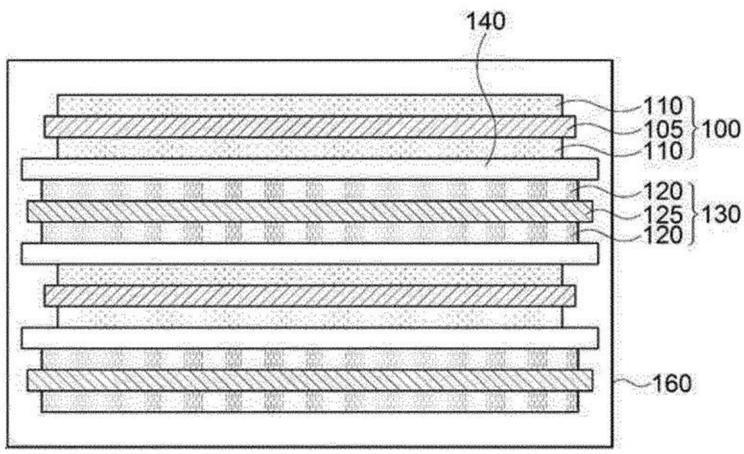

**INTERNATIONAL SEARCH REPORT**

International application No. **PCT/KR2024/095156**

**A. CLASSIFICATION OF SUBJECT MATTER**

**H01M 10/0567**(2010.01)i; **H01M 10/0569**(2010.01)i; **H01M 10/052**(2010.01)i; **H01M 4/131**(2010.01)i; **H01M 4/525**(2010.01)i; **H01M 4/505**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0567(2010.01); C07F 9/09(2006.01); C07F 9/14(2006.01); H01G 11/64(2013.01); H01M 10/052(2010.01); H01M 10/0525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 이차전지(secondary battery), 전해액(electrolyte), 리튬염(lithium salt), 유기용매(organic solvent), 포스포로플루오리데이트(phosphorofluoridate)

**C. DOCUMENTS CONSIDERED TO BE RELEVANT**

| Category* | Citation of document, with indication, where appropriate, of the relevant passages | Relevant to claim No. |
|---|---|---|
| X | CN 112625062 A (ZHUHAI COSMX BATTERY CO., LTD.) 09 April 2021 (2021-04-09) See claims 1-10; and paragraphs [0055]-[0056], [0068]-[0069] and [0078]-[0079]. | 1-15 |
| X | KR 10-2255398 B1 (DONGWOO FINE-CHEM CO., LTD.) 24 May 2021 (2021-05-24) See claims 1-8; paragraphs [0101]-[0102], [0113]-[0116] and [0122]-[0129]; and chemical formula 2. | 1-15 |
| X | KR 10-2022-0099852 A (SAMSUNG SDI CO., LTD.) 14 July 2022 (2022-07-14) See claims 1-10; paragraphs [0047], [0095]-[0099], [0101] and [0103]-[0105]; and chemical formula 4. | 1-15 |
| A | KR 10-2021-0002628 A (DAIKIN INDUSTRIES, LTD.) 08 January 2021 (2021-01-08) See entire document. | 1-15 |
| A | JP 2016-196452 A (ASAHI KASEI CORP.) 24 November 2016 (2016-11-24) See entire document. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/095156**

| Patent document cited in search report | | | Publication date (day/month/year) | Patent family member(s) | | | Publication date (day/month/year) |
|---|---|---|---|---|---|---|---|
| CN | 112625062 | A | 09 April 2021 | CN | 112625062 | B | 09 September 2022 |
| KR | 10-2255398 | B1 | 24 May 2021 | CN | 114365317 | A | 15 April 2022 |
| | | | | EP | 4027429 | A1 | 13 July 2022 |
| | | | | EP | 4027429 | A4 | 02 August 2023 |
| | | | | JP | 2022-547057 | A | 10 November 2022 |
| | | | | JP | 7362905 | B2 | 17 October 2023 |
| | | | | KR | 10-2021-0028586 | A | 12 March 2021 |
| | | | | US | 2022-0294014 | A1 | 15 September 2022 |
| | | | | WO | 2021-045530 | A1 | 11 March 2021 |
| KR | 10-2022-0099852 | A | 14 July 2022 | CN | 116648803 | A | 25 August 2023 |
| | | | | EP | 4276966 | A1 | 15 November 2023 |
| | | | | US | 2023-0268552 | A1 | 24 August 2023 |
| | | | | WO | 2022-149740 | A1 | 14 July 2022 |
| KR | 10-2021-0002628 | A | 08 January 2021 | CN | 112119528 | A | 22 December 2020 |
| | | | | EP | 3780232 | A1 | 17 February 2021 |
| | | | | EP | 3780232 | A4 | 27 April 2022 |
| | | | | EP | 4060782 | A1 | 21 September 2022 |
| | | | | JP | 2021-220829 | A1 | 14 January 2021 |
| | | | | JP | 2022-017428 | A | 25 January 2022 |
| | | | | JP | 7148819 | B2 | 06 October 2022 |
| | | | | JP | 7284423 | B2 | 31 May 2023 |
| | | | | KR | 10-2022-0148317 | A | 04 November 2022 |
| | | | | KR | 10-2508018 | B1 | 09 March 2023 |
| | | | | KR | 10-2623800 | B1 | 12 January 2024 |
| | | | | US | 2021-0234201 | A1 | 29 July 2021 |
| | | | | WO | 2019-220829 | A1 | 21 November 2019 |
| JP | 2016-196452 | A | 24 November 2016 | | None | | |

Form PCT/ISA/210 (patent family annex) (July 2022)